Europäisches Patentamt

European Patent Office (11) Publication number: **0 012 580**

Office européen des brevets **B1**

(19)

(12) EUROPEAN PATENT SPECIFICATION

(45) Date of publication of patent specification: **05.10.83**      (51) Int. Cl.³: **F 41 J 5/06**

(21) Application number: **79302820.0**

(22) Date of filing: **07.12.79**

(54) Apparatus for detecting and locating the position of a bullet.

(30) Priority: **07.12.78 GB 4759878**

(43) Date of publication of application:
**25.06.80 Bulletin 80/13**

(45) Publication of the grant of the patent:
**05.10.83 Bulletin 83/40**

(84) Designated Contracting States:
**BE CH DE FR GB SE**

(56) References cited:
**BE - A - 869 979**
**BE - A - 880 019**
**CH - A - 526 763**
**DE - U - 7 726 275**
**FR - A - 1 555 299**
**US - A - 2 925 582**
**US - A - 3 489 413**
**US - A - 3 678 495**
**US - A - 3 707 699**
**US - A - 3 778 059**

(73) Proprietor: **Australasian Training Aids (Pty) Ltd.**
**161-169 Fallon Street**
**Albury New South Wales, 2640 (AU)**

(72) Inventor: **Phillips, Robert Barratt**
**60 Dinorban Close**
**Fleet Near Aldershot, Hants (GB)**
Inventor: **Bowyer, William Henry**
**9 Tongham Road**
**Farnham, Surrey (GB)**
Inventor: **Moxley, Bruce**
**62 Harcourt Drive**
**Earley Reading, Berkshire (GB)**

(74) Representative: **Jack, Bruce James et al,**
**FORRESTER & BOEHMERT Widenmayerstrasse 4/I**
**D-8000 Munchen 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Apparatus for detecting and locating the position of a bullet

This invention relates to apparatus for detecting and locating the position of a bullet fired at a target. More particularly this invention relates to an apparatus for detecting and locating the position of a projectile fired at a target, said apparatus comprising the target, the target comprising a framework covered with sheets of material capable of being penetrated by a bullet whereby to form a chamber through which the projectile can pass, and spaced transducers mounted in the chamber to detect shock or pressure waves. generated in the chamber by a bullet passing therethrough, and means to measure the time differences between the instants of reception of the shock or pressure wave at the respective transducers and means for calculating from the time differences the position where the bullet passed through the chamber.

German Utility Model Application DE—U— 77 26 275, discloses a target system comprising a framework constituting an outer periphery of the target. The framework is provided with front and rear sheets of a flexible rubber-like material to form an anechoic chamber. A plurality of transducers is located within the chamber, the transducers being located on a straight horizontal line in the lower part of the chambers. A bullet fired at the target passes through the rubber like sheets and, thus, through the anechoic chamber. As the bullet passes through the anechoic chamber, a shock or pressure wave is generated which expands radially outwardly from the path of the bullet between the two outer skins of the chamber. The shock or pressure wave impinging on the transducers. By measuring the time of arrival of the shock or pressure wave at each transducer, it is possible to calculate the position at which the bullet has passed through the target, provided that the precise position of each transducer is known, the speed of sound in air within the anechoic chamber is known, and the speed of the bullet is known.

With the transducers arranged as disclosed in the said German Utility Model Application the position of the bullet can only be calculated to predetermined accuracy limits. The present invention seeks to provide an apparatus in which the position of the bullet can be calculated with a greater accuracy than in the arrangement of the German Utility Model.

The present invention provides an apparatus in which said transducers are mounted so that their responsive elements are operatively on an arc of circle which has its centre in the target region, all the transducers being located in a shielded part of the chamber beneath the zone defined by the penetrable sheets.

Preferably the transducers are located at the bottom of the chamber and advantageously three transducers are provided within said chamber.

Conveniently said centre of said circle is aligned with the centre of a bulls eye or aiming mark on the target.

Preferably the transducers are vibration isolated from said target so as to be responsive to airborne shock or pressure waves within said chamber and not mechanical shock waves in said target.

Conveniently said transducers are mounted on a beam which is vibration isolated from said target so as not to be responsive to mechanical shock waves in said target.

Preferably means are provided for measuring the speed of sound in air within said chamber so that this measurement can be used when calculating the position of a bullet by said calculating means.

Advantageously said means for measuring the speed of sound in air comprises means for generating a pulse of sound and means for measuring the time of flight of said pulse of sound over a known distance.

Conveniently said means for measuring the time of flight comprises two spaced apart further transducers, means for measuring the time differences between the instants of reception of the pulse of sound at the said two further transducers.

Preferably said means for generating a pulse of sound is initiated by circuit means after one of said transducers on said arc of a circle detects a shock or pressure wave from a bullet.

Advantageously said further transducers are inhibited from passing signals by circuit means except during a predetermined period of time immediately after said means for generating a pulse of sound is operated.

Conveniently said transducers on an arc of a circle are connected with circuit which has a set threshold level such that signals generated by said transducers are passed for calculations to be made as to the position of passing of a projectile only when the shock or pressure wave is of a certain magnitude.

Preferably said transducers have a piezo electric transducer element therein with the axis of sensitivity thereof aligned to be parallel with the plane of said sheets of material.

Conveniently said chamber is an anechoic chamber.

In order that the invention can be more readily understood preferred embodiments thereof will now be described by way of example with reference to the accompanying drawings in which:

Figure 1 is a perspective schematic view of a shooting range which incorporates apparatus in accordance with the invention;

Figure 2 is a front view of a target made in accordance with the invention with parts thereof cut away;

Figure 3 is a block circuit diagram of electrical circuitry associated with the apparatus of Figure 2;

Figure 4 is a sectional view of a position determining transducer;

Figure 5 is a top perspective of a mounting means for the transducer of Figure 4;

Figure 6 is a sectional view of a speed of sound transducer;

Figure 7 is a sectional view of a spark generator;

Figure 8 is a low noise amplifier for connecting to the transducer of Figure 4;

Figure 9 is an overall block circuit diagram of part of the circuitry of Figure 3;

Figure 10 and 11 are detailed circuit diagrams of parts of the circuitry connected with the transducers 4;

Figures 12, 13, 14, 15 and 16 are detailed diagrams of circuits associated with the spark generator in Figure 7; and

Figure 17 is a timing diagram of all signals in the said circuitry.

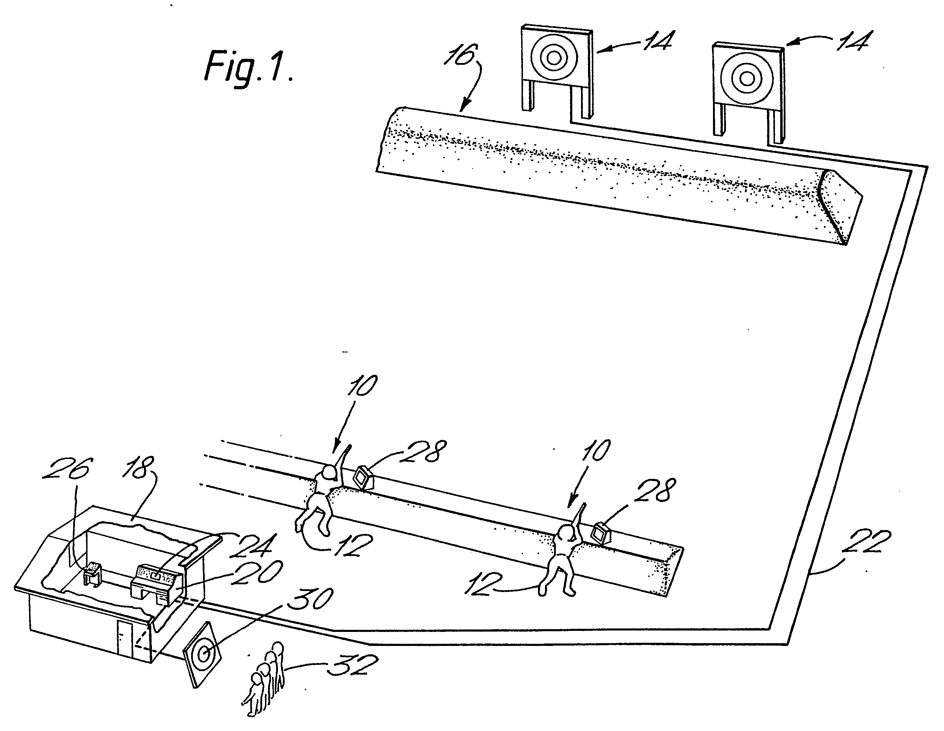

Figure 1 shows in perspective view part of a marksmanship training range which incorporates apparatus for detecting a projectile in accordance with the present invention. The range has a plurality of firing points 10 from which trainee marksmen 12 may shoot at targets 14. The targets will be described in greater detail hereinafter. An earthen embankment 16 may be located in front of the targets to protect the various items supporting targets in position. However, the embankment 16 does not obstruct the marksman's view of the targets 14 from the firing points.

A control room 18 is provided, and the control room 18 contains a computer 20 that is connected, by means of lines 22 to transducers located within the targets 14. The arrangement of transducers will be described in greater detail hereinafter. The computer 20 is mounted within a console that includes a visual display unit 24, and the computer is also connected to a printer or paper punching device 26. The computer is also connected to visual display units 28 which are provided at each firing point 10 so that each trainee marksman may view a respective visual display unit 28. The computer 20 is also connected, as shown in Figure 1, to a large visual display unit 30 which may be located at any convenient position for observation by spectators 32.

Although the targets 14 shown in Figure 1 have marked thereon representations of the conventional bull's-eye-type target the target may have any suitable marking thereon.

It is to be appreciated that when the marksmanship training range illustrated in Figure 1 is utilised the trainee marksman 12 will fire rounds at the targets 14. The transducer arrangement that will be described hereinafter then supplies signals to the computer 20, and the computer 20 calculates the position at which the bullet passed through the target.

Then the computer 20 causes a representation of the target having superimposed thereon an indication of the point at which the bullet passed through the target to be displayed on the appropriate visual display units. Thus, the visual display unit 28 provided for each marksman 12 will provide a display indicating where shots fired by that marksman have passed through the target. The range controller may view the progress of any individual marksman by causing an appropriate image to be displayed on the visual display unit 24. Spectators may also follow the progress of any particular marksman by observing appropriate images displayed on the visual display unit 30.

Whilst Figure 1 has illustrated a complete range assembly it is to be understood that the present invention relates primarily to the structure of the targets 14.

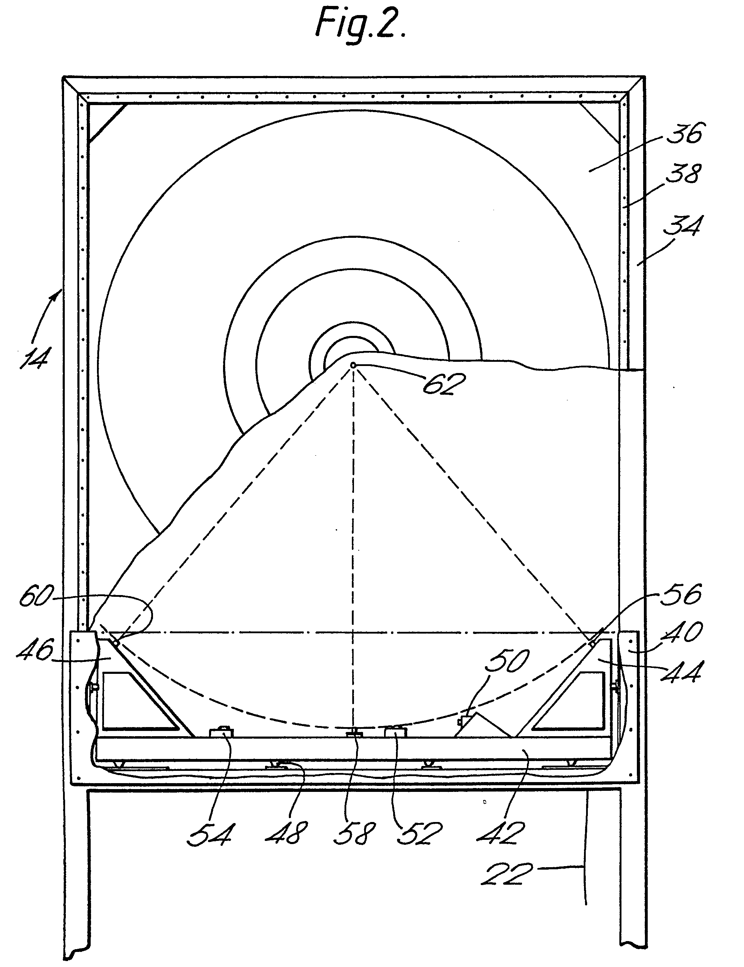

Referring now to Figure 2 a target 14 comprises a substantially square hardwood frame 34. A membrane 36 covers the upper part of the opening defined by the frame 34. The membrane is formed of a resilient material and a suitable material is 3 mm thick "LINATEX" available from Linatex Australia Limited, Sinclair Road, Dandenong, Victoria, Australia. The member is held in position by hardwood trapping strips 38 that are nailed or screwed to the hardwood frame 34 to trap the edges of the flexible membrane. It is to be appreciated that membranes are provided on both the front and rear faces of the frame 34. The lower part of the opening defined by the frame 34 is covered, on both the front and rear surfaces of the frame with sheets of 8 mm thick hardwood plywood 40 which is screwed or nailed to the frame 34. In Figure 2 the great proportion of the sheet of plywood 40 is shown cut away for the sake of clarity of illustration of components located within the frame 34 between the two sheets of plywood 40.

Located at the base of the chamber defined within the frame 34 by the resilient membranes 36 and the plywood sheets 40 is a sensor support beam 42 which constitutes an elongate member formed of aluminium alloy. The beam 42 extends transversely across the width of the target, as illustrated and at each end of the beam there is provided a sensor support bracket 44, 46. The assembly comprising the beam 42 and the brackets 44, 46 are mounted on plates attached to the base and the side of the frame by means of anti-vibration mountings 48. Suitable antivibration mountings are those sold as type number E 220240 by Barry Control Inc., 700 Pleasant Street, Watertown, Mass., U.S.A.

Mounted on the sensor beam is an acoustic pulse source 50 which, as will be described hereinafter, is utilised in connection with the determination of the speed of sound in air within the chamber and also two sensors 52, 54 which, as will be described hereinafter, are sensors associated with the determination of the speed of sound in air.

The sensor support beam 42 and associated brackets 44, 46 also support three sensors 56, 58, 60, these sensors each being adapted to detect the acoustic pressure disturbance caused within the chamber resulting from the passage of the projectile such as a bullet through the chamber. The precise construction of each of the sensors 56, 58, and 60 will be described hereinafter.

However it is to be noted that the three sensors 56, 58 and 60 are located on an arc of a circle, the circle lying in a plane which is substantially parallel to the plane defined by the membrane 36 extending across the front of the frame 34. In this particular embodiment the centre of the circle defined by the positions of the three sensors 56, 58 and 60 is also the centre 62 of the bull's-eye target that is present on the front face of the membrane 36.

It is to be appreciated that the target 14 as described above may be mounted in position on any convenient support structure.

It will be appreciated that when a bullet penetrates the membranes 36 its passage through the chamber will generate a radially expanding shock pressure wave and such a pressure wave will impinge on each of the sensors 56, 58, 60 to cause them to provide respective output signals since each such sensor is a transducer. Such output signals are then processed to ascertain the time differences between each of the signals generated by the respective transducers 56, 58, 60 so that the computer 20 can calculate the position of passing of the bullet relative to the target 14. Details of the mathematics to enable the necessary calculations are made is disclosed in Belgian Patent 869979.

With the transducers 56, 58, 60 arranged on an arc of a circle, the centre of which is at or close to the centre of the target, when a bullet passes through the centre of the target all transducers 56, 58 and 60 will receive the shock wave substantially instantaneously and therefore the position of the bullet can be calculated without determining precisely the speed of sound in air within the chamber of the target. Thus the accuracy of determination, when compared with the prior art is improved. It is to be noted however, that in the described embodiment a calculation of the speed of sound is made and used in all calculations as it is not always possible to have the projectile pass through the absolute centre owing to the random nature of marksmanship.

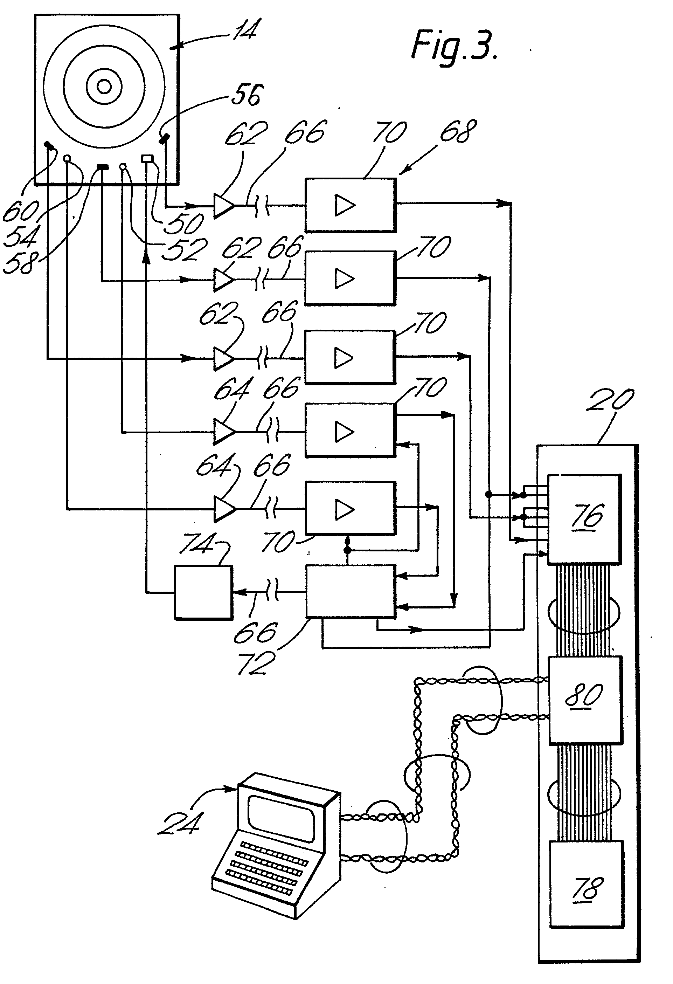

Referring now to Figure 3 it can be seen that the target 14 is suitably positioned and each of the position transducers 50, 58 and 60 are connected with respective low noise wide band amplifiers 62. Whereas velocity of sound transducers 52 and 54 are connected to low noise wide band amplifiers 64. The wide band amplifiers 62 and 64 are provided in the vicinity of the target 1 and leads 66, shown broken connect with the signal processing circuitry 68 which is situated at some convenient point such as adjacent the marksman. The signal processing circuitry comprises discriminators and pulse shapers 70, and a speed of sound determination control circuit 72. A high voltage generator 74 is used for supplying energy to create the spark in the spark generator of the acoustic source 50 and it is situated beneath the target 14 and also connected with the circuitry adjacent the marksman by the lead 66. Each of the position transducers 56, 58 and 60 connect with respective signal processing apparatus 70 which generates a respective signal for processing by a computer 20. Such signal is representative of the time that the respective position transducers 56, 58 or 60 receive the shock wave at its surface. The time difference between the respective signals being representative of the position of the passing of the bullet through the target 14. The speed of sound transducers 52 and 54 operatively connect with signal control means 72 for establishing the time taken for sound to travel between transducers A and B and for initiating generation of a high voltage at the high voltage generator 74 at the appropriate time. It will be noted that the high voltage is initiated on receipt of a signal from the central position transducer 58. The computer 20 is operatively connected with a VDU 24 which is positioned for easy visibility so that a display can be given of the position of passing of a projectile fired by a marksman. The computer 20 includes an interface which connects with all the signal processing means. The computer 20 is controlled by a dual floppy disk drive 78 available from Computer Automation Inc. The computer a central mini-computer 80 which is type LS12/20G which is a proprietory computer available also from Computer Automation Inc. The VDU 24 is an integrated key board assembly available from Applied Digital Data Systems. The interface 76 accepts the timing edges of the position transducers 56, 58 and 60 as processed by the signal processing means 70 and also the signals from the speed of sound transducers 52, 54 and converts these into a form suitable for the computer system to accept. The operation of providing a suitable interface and programming of the computer is regarded as known technology able to be performed by a person skilled in computer technology. The mathematical computations needed to take into account the fact that the transducers 56, 58 and 60 are mounted on an arc of a circle. Techniques such as Newton-Raphson processing applicable to solving simultaneous equations is ideally suited to the particular calculations involved.

In use, after the apparatus is set up and the computer system is initialized, the VDU 24 will indicate the system is ready to receive a shot by displaying a message 'fire' 'shot number one'. When the bullet is fired it passes through the front membrane 35 and causes a circularly expanding air pressure wave disturbance to be set up in the air space between the front and rear membranes 35 centred on the point of penetration of the bullet. As this pressure wave expands it in due course impinges on the three position transducers 56, 58 and 60. Each of the transducers 56, 58 and 60 in turn generate an electrical signal which is amplified by the low noise wide band amplifiers 62 and passes down the cable 66 to the signal processing units 70. Here the wave form is converted to a logic transition and fed into the timer interface 76. The timer interface 76 contains counters which are controlled so that they count to values which are representative of the difference in the time of arrival of the pressure wave at the three position transducers 56, 58 and 60. A velocity of sound measurement is initiated when the centre position transducers 58 has an output and is initiated after a set time delay of approximately 0.5 seconds to allow for shock or pressure wave vibrations within the target 14 to decay. The spark discharge creates a fast rise time acoustic pulse. This pulse propagates through the chamber reaching transducer 52 first and then transducer 54. The resulting signals generated by the transducers are amplified by their respective low noise wide band amplifiers 64 and transmitted down the leads 66 and are converted into a pulse whose duration is equal to the difference of time of arrival of the pressure pulses at the two speed of sound transducers 52 and 54. This signal then feeds into the speed of sound input channel of the timer interface 76 and causes a counter therein to count a value representative of the duration of this pulse.

When all these events have occurred the machine code sub routine servicing the timer interface 76 then causes the respective counter values to be transferred from the timer interface 76 into the main mini-computer 80 where they are then made available for the program to compute the bullet position. The bullet position is computed and then displayed on the screen of the VDU 24. Once displayed the computer 80 will then indicate when it is ready for another shot by a message as before — fire shot number N. Desirably the computer 80 will calculate back from the speed of sound in air, the actual air temperature. This calculation will not be precise but will be within a few degrees centigrade of the true value and by noting this value the computer can make a calculation of the thermal expansion of the aluminium beam 42 within the target 14 so to compensate for any alteration of the position of the transducers as a result of expansion thereof and appropriately adjust the mathematical computations so as to retain utmost accuracy.

A lamp indicator, referred to later in the description, is provided for each of the position transducers 56, 58 and 60 to indicate that the circuitry associated therewith has suitably latched. This lamp indicator is provided at a suitable position such as on the VDU 24.

A detailed description of the apparatus will now follow.

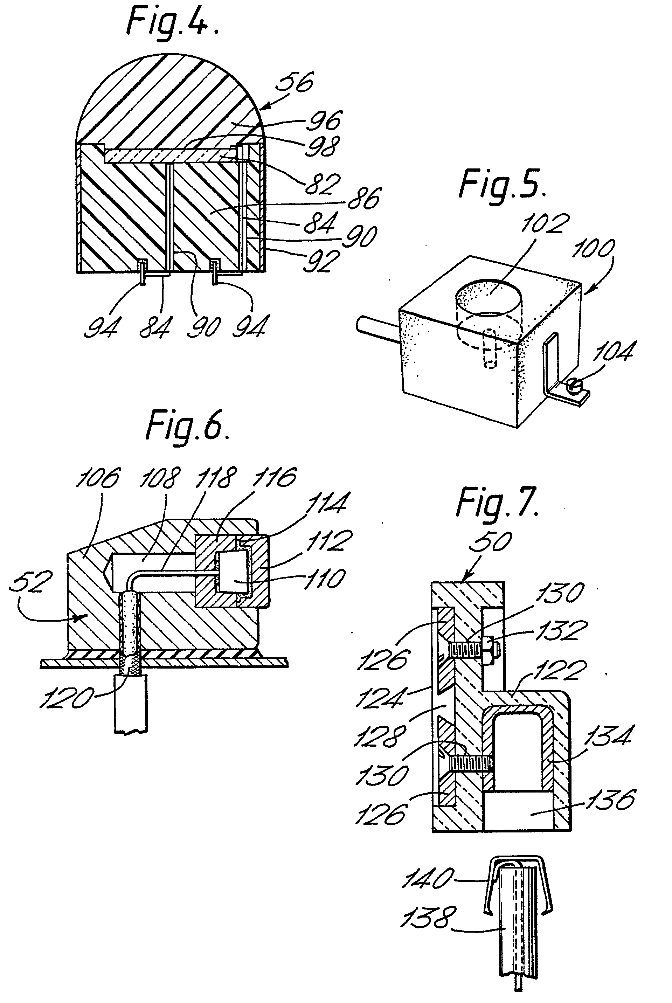

With reference to Figure 4 there is shown one of the position transducer 56. Each of transducers 56, 58 and 60 are identical and are fully disclosed in the aforementioned Belgian Patent. Briefly each comprises a transducer element consisting of a disc 82 of piezo-electric material, of, lead zirconium titanate. The disc 82 is 1 mm thick and 5 mm in diameter. The opposed planar faces of the disc 82 are provided with a coating of conductive silver which may be provided in any convenient way, such as by vacuum deposition. Two electrically conductive wires 84, of copper are connected to the centre of the lower surface of the disc 82 and to the periphery of the upper surface of the disc 82 by soldering or by ultrasonic bonding. The disc 82 is firmly mounted in a housing which comprises a cylindrical member 86 having a 5 mm diameter recess 88 in one end face, the recess 88 having a depth of 1.5 mm, the recess 88 also being associated with an axial bore 90 extending through the member 86 to accommodate the wires 84. The member 86 is formed of Tufnol, which is a phenolic resin bonded fabric, this material being readily obtainable in cylindrical form, the housing being machined from the material, although alternatively the housing may be formed of a two part phenolic resin such as that sold under the Trade Mark "Araldite", the resin being retained in a cylindrical aluminium case 92 and subsequently being machined. If this particular expedient is utilised the aluminium case 92 may be earthed to provide a Faraday cage to minimise noise. The piezo-electric material and wires are bonded into the member 86 with an adhesive such as that sold under the Trade Mark "Araldite" or a cyano acrylic impact adhesive. The wires 84, protruding from the lower ends of the bores 90 are soldered to respective pins 94, and an adhesive or other suitable setting material is utilised to retain the pins in respective bores in the bottom of the member 86. A solid hemispherical dome 96 is held to the transducer by a suitable adhesive such as that sold under the Trade Mark "Araldite". The dome may be machined from aluminium or cast from a setting resin material such as that sold under the Trade Mark "Araldite". The dome 96 has an outer diameter of 8 mm, which is equal to the diameter of the housing 92, and a centrally disposed projection 98 on the base, this projection 98 being adapted to contact the piezo-electric disc 82 and having the same diameter as the disc 82. Alternatively the dome 96 and the member 92 may cast as a single integral unit.

The pins 94 protruding from the base of the holder may be connected to a co-axial cable, and the entire connection may be encapsulated in soft rubber. The co-axial cable may be short (i.e. up to 1 metre in length) and is connected to the amplifier 62.

The housing coupled with its associated transducer, is mounted, as generally described above, on the beam 42 and it is important that both the transducers 56 and any cable emerging therefrom be acoustically decoupled from the beam 42 and the frame 34 or any other rigid structure that could possibly receive the shock wave detected by the transducer 56 before the shock wave is received by the hemispherical dome 96 provided on top of the transducer 56. The transducers 56, 58 and 60 may be mounted on respective blocks of any suitable acoustic de-coupling medium, such as an expanded polymer foam, or a combination of polymer foam and metal plate. The most preferred material is closed cell foam polyethylene, this material being sold under the Trade Mark "Plastizote" by Bakelite Xylonite Limited. Of course, many other acoustic de-coupling materials may be used such as glass-fibre cloth or mineral wool.

The transducer 10 may be mounted by taking a block 100 of acoustically coupling medium as illustrated in Figure 5, forming a hole or recess 102 within the block of material dimensioned to accommodate the transducer 56. The entire block may then be clamped in any convenient way, such as by clamps 104 to the beam 42.

A speed of sound transducers is shown in detail in Figure 6. Each transducer 52 and 54 is identical. Each sensor has a housing 106 manufactured from aluminium. The housing 106 has a bore 108 therein into which is fitted the actual transducer device. The actual transducer device comprises a piezo-electric element 110 type MB1043 available from Mullard Limited. The transducer element 110 is bonded to a head 112 made from Epoxy resin type MX750 and hardener type HY956 available from CIBA-GEIGY LIMITED. The head 112 is bonded to the piezo-electric element 110 with a conductive epoxy such as a silver type 3021. The layer of epoxy is designated 114. The epoxy 114 electrically contacts with the housing 106 to provide a conductive path. The piezo electric element 110 is in turn supported within a backing 116 manufactured from similar epoxy as the head 112 and a lead 118 is bonded to the rear of the piezo-electric element 110 by a conductive epoxy and connected with the central conductor of a coaxial cable 120. The braid of the coaxial cable 120 electrically connects with the housing 106 so that any signal generated by the piezo-electric element 110 can be transmitted along the coaxial cable 110. For this purpose the coaxial cable 110 is tightly fitted within an aperture in the housing 106 so that the braid is tightly held and electrically engages with the housing 106.

Referring now to Figure 7 there is shown in detail the spark generator 50. The spark generator 50 comprises a rectangular housing 122 of a polycarbonate material. The housing 122 has a rectangular recess 124 in the front thereof in which are placed two discharge electrodes 126.

The spacing between the ends of the discharge electrodes 126 designated by numeral 128 is the actual spark gap. The electrodes 126 are of a suitable conducting metal such as hardened mild steel and are bolted to the housing 122 by suitable bolts 130. The nut 132 on the end of the uppermost bolt 130 contains a lead which earths the uppermost electrode. The lowermost electrode 126 is held by the bolt 190 which threads into a brass cap 134 which is fastened within a circular opening 136 within the housing 122. A high voltage lead 138 has a suitable cap 140 such as used in automotive high tension leads fastened over the end of the lead 138, and is snap fastenable into the socket 134.

When a high voltage signal passes down the high voltage lead 138 it passes to the spark gap 128 and causes a spark discharge thereacross. This in turn creates a very fast rise-time airborne pressure wave within the chamber of the target 14 and this wave is transmitted towards the speed of sound transducers 52 and 54 whereupon it impinges on the head 112 thereof and causes a voltage to be generated by the piezo-electric element 110 therein.

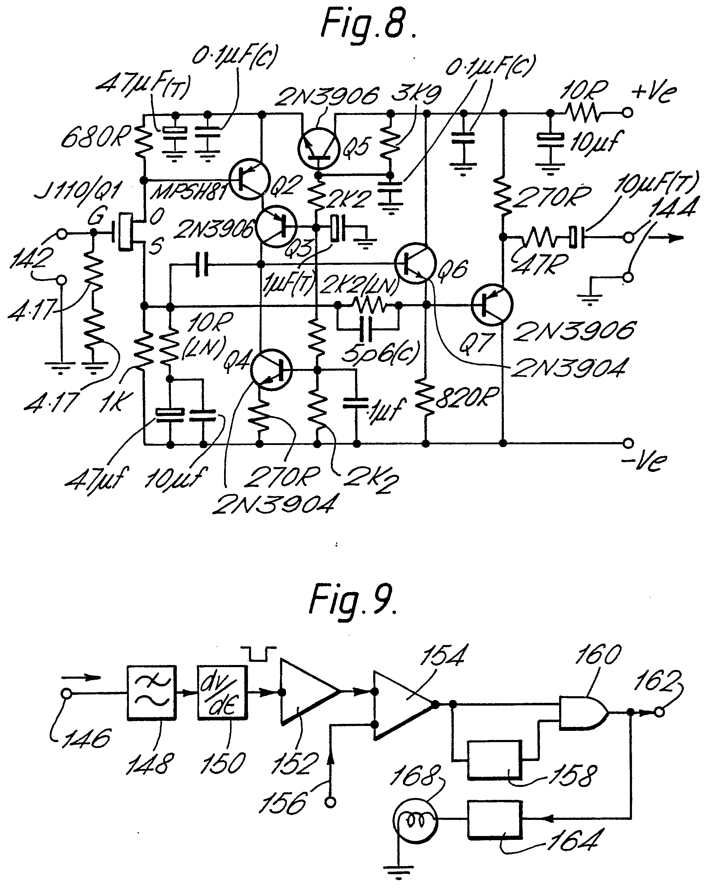

Reference is now made to Figure 8 wherein suitable low noise wide band amplifier is shown in detail. Each of the position transducers 56, 58 and 60 are connected with the input 142 of a respective one of the amplifiers shown in Figure 8. The amplifiers are designated item 62 in Figure 3.

The operation of the amplifier should be self evident to a person skilled in the art however, a brief description is as follows:

The terminals marked "G" and "S" of the input device (Q1) can be regarded as the non-inverting and inverting input terminals of a high voltage gain, wide band amplifier, whose output point is the emitter terminal of Q6. At the frequencies of interest, the overall gain is controlled by negative feedback to the inverting input by way of a restrictive divider network formed by the 2K2 and 10R resistors. Assuming that a transducer 10 connected to the amplifier 30 input terminals generates a small positive going voltage this causes the current flowing through Q1 to increase, which is fed into the base of Q2 which then results in an amplified increase in Q2's collector current. This amplified current flow through Q3 which forms a common-base buffer stage and creates a very large voltage change at the junction of Q3 and Q4 collectors (Q4 forms a high output impedance constant current collector load for Q3). This voltage is fed via emitter follower buffer stage Q6 to the top end of the already mentioned resistive divider chain. A proportion of this voltage appears at the junction of 2K2, 10R and Q1 "S" terminal forming the negative feedback, stabilising the overall gain to approximately 200×. Q7 further buffers the amplifier output which then connects via a DC decoupling capacitor to the output terminals 144. Q5 forms a stable voltage supply for the sensitive input stages of the amplifier.

Figure 9 shows a block schematic diagram of the electronic processing involved for the position sensing. The diagram shown in Figure 9 represents a channel for only one of the position transducers 56, 58 or 60. In Figure 9 the incoming signals from the output 144 each of the amplifiers 62 from the respective position signal transducers 56, 58 or 60 are first passed from an input 146 through a low pass filter 148 to remove very high frequency and noise "glitches". They then pass through a frequency shaping network 150 to provide a very fast rising negative going pulse representative of a shock wave impinging on the respective transducer. This signal is amplified and passes through a buffer amplifier 152 and is fed into a differential amplifier 154. The differential amplifier 154 has a threshold voltage introduced on line 156 so that when the signal which is passed through the amplifier 152 exceeds the threshold the output of the differential amplifier changes by falling from a high voltage to a low voltage and triggers a monostable multi-vibrator 158 causing its output to generate a low going pulse of approximately 50 ms sec duration. This pulse is buffered by a line driver 160 and the output is fed to an output terminal 162 for passing to the interface 76 (see Figure 3) of the computer 20. The output from the buffer driver 160 is in turn passed to a monostable 164 to cause a lamp 168 to operate for a set time. The operation of the lamp is provided to give an indication that the respective transducer 56, 58 or 60 has generated a suitable signal. As previously explained the lamp 168 is placed on the VDU 24 console at a convenient position.

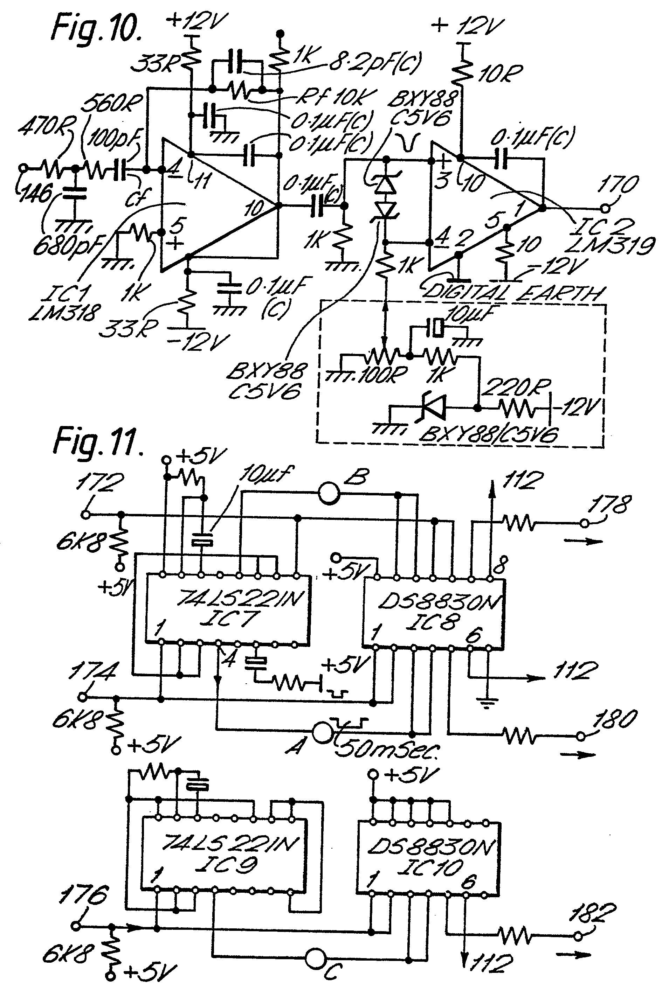

Referring now to Figure 10 which shows part of the circuit of Figure 9 in greater detail the incoming analogue signal from the amplifiers 62 for each channel are passed from input 146 through the low pass filter comprising resistor 470R and capacitor 680PF. The signals then pass through a frequency shaping network comprising IC1. The value of R and C shown as feedback around an IC1 serves to enhance the higher frequency components of the signal and suppresses the lower frequency component such as those caused by mechanical movement of the transducers 56, 58 and 60. When a shock wave impinges on a transducer 56, 58 or 60 the resulting voltage excursions at the output of IC1 comprise an initially very fast rising negative going pulse. This pulse is coupled to an input of a threshold detector formed by IC2 whose other input is set at a preset negative voltage. Typically the threshold is minus 0.2 volts and is adjusted by varying the value of the potentiometer shown as 100R. When the threshold is exceeded the output of IC2 abruptly falls from a high voltage typically plus 4 volts to a low voltage typically 0.5 volts. This negative going transition is shown at the output 170 of IC2 and is applied to the circuit of Figure 11 together with similar signal outputs from each of the amplifiers and signal shapers associated with the remaining two of the transducers 56, 58 and 60 at the respective terminals 172, 174 and 176 on the input of the circuit of Figure 11. Thus, one input signal is applied to IC7 of Figure 11 causing its output (terminal 4) to generate a low going pulse of approximately 50 m sec duration. This pulse is buffered by one half of buffer line driver IC8 and fed to the appropriate output terminal 178. In addition a second output from IC8 is available on terminal 6 as the lamp driving circuit referred to in Figure 8 as item 112. Similar output appears on terminals 8 of IC8 and terminal 6 of IC10. The circuits for each of the channels from the respective transducers 56, 58 and 60 are incorporated into the IC shown in Figure 11 and accordingly, three separate outputs appear at output terminals 178, 180, 182 representing the time difference between the instants of reception of the shock wave at the respective transducers 56, 58 and 60.

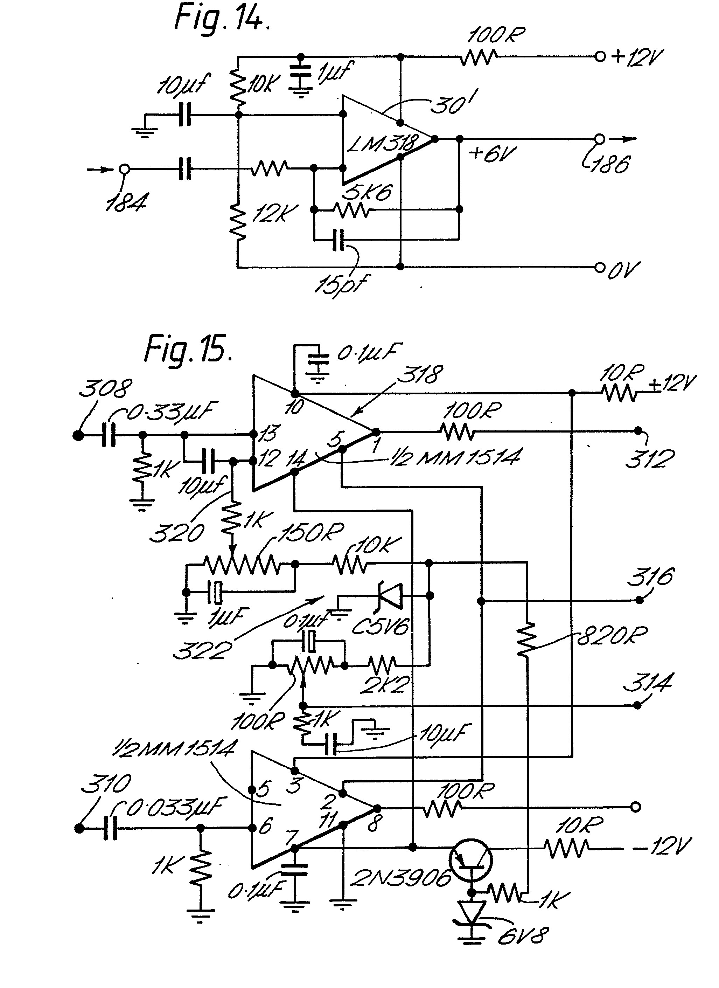

Referring to Figure 14 there is shown one amplifier 64, used for amplifying the signals generated by the piezo electrical element 110 in the speed of sound transducers 52 or 54. It should be realised that the amplifier shown in Figure 14 is connected with one of the transducers and an identical amplifier is connected to the other. The operation of the circuit is self evident, the amplifier having a gain of approximately 5. This gain is adjusted by controlling the value of the resistance in the input line. The amplifier has an input 184 and an output 186.

Attention will now be given to the arrangement for measuring the velocity of sound in air within the chamber defined within the target 14. In simple terms this part of the apparatus receives an initiation signal from the output of the signal processing channel which is associated with the centre position measuring sensor 58. In response a drive signal is generated which is supplied to the high voltage pulse generator 130 to initiate a spark discharge across the spark gap 128. Subsequently two signals are present on the signal channels associated with the sensors 52 and 54 and these signals are processes to provide an appropriate signal to be supplied to a "speed of sound" input of a computer timer-interface that will be described in greater detail hereinafter. Means are also provided for insuring that spurious signals are not generated as a result of the sensors 52, 54 detecting pressure or shock waves caused by a bullet or other projectile passing through the target 14 rather than by a spark discharge across the gap 98.

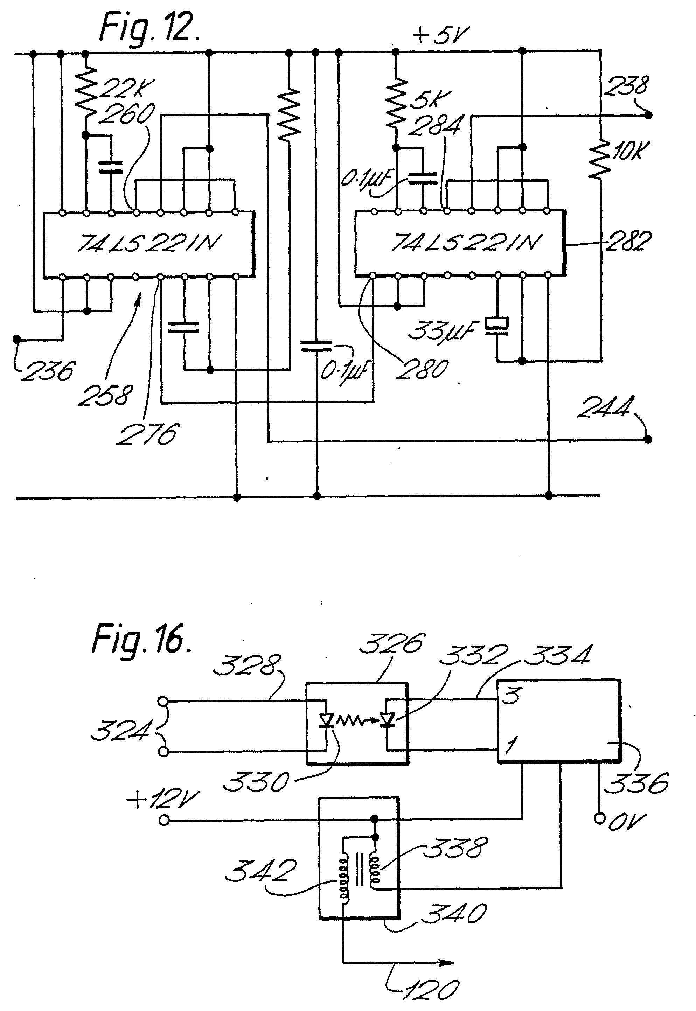

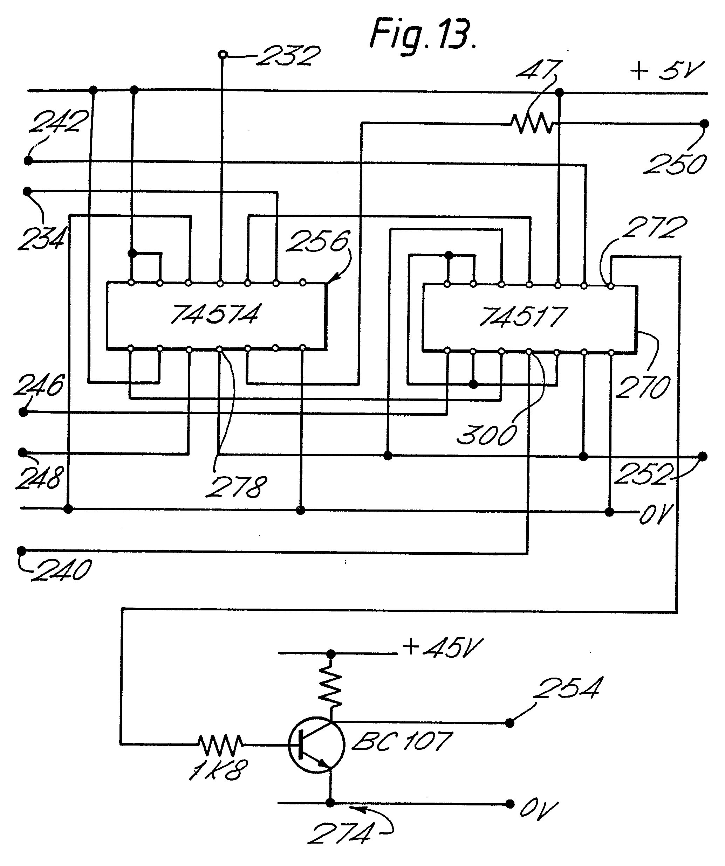

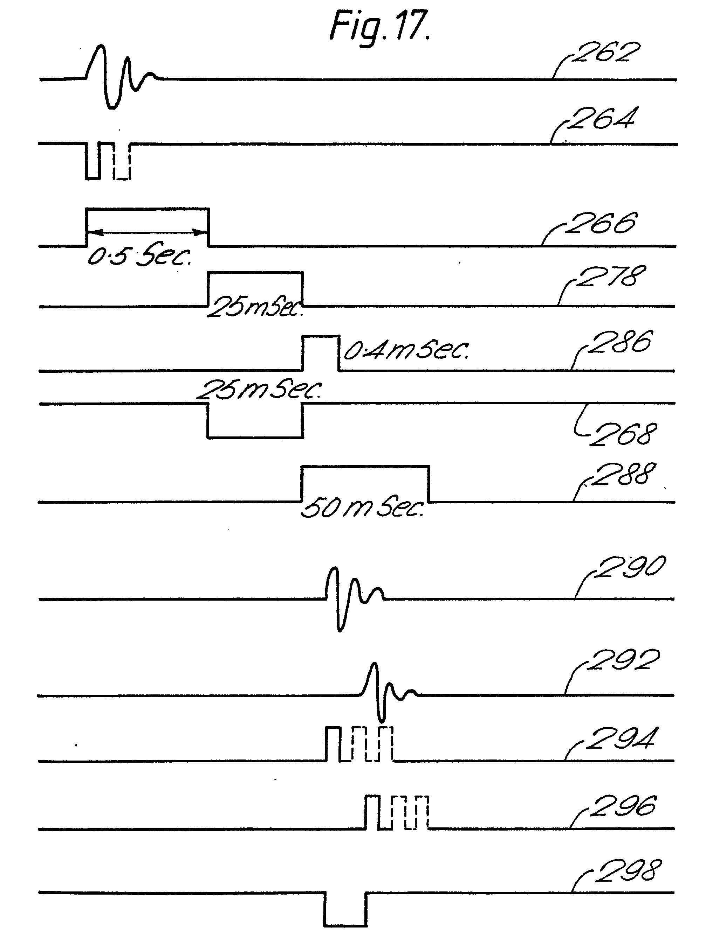

Figures 12 and 13 together illustrate the circuitry of this portion of the apparatus. The circuitry illustrated in Figures 12 and 13 has various inputs. The terminal 232 is connected to the output 222 of the threshold detector 154 of the signal processing channel associated with the centrally located sensor 58. Thus, whenever a projectile passes through the target 14 a signal will be supplied to the terminal 232. The terminal 234 of Figure 13 is connected to terminal 236 of Figure 12. The terminal 238 of Figure 12 is connected to terminal 240 of Figure 13. Terminal 242 of Figure 13 is connected to terminal 244 of Figure 12. Terminal 246 of Figure 13 is connected to the output of a threshold detector in the signal processing channel associated with the sensor 52 so that a signal is supplied to the terminal 246 only when the sensor 52 sensors a pressure or shock wave or other acoustic disturbance. Similarly the terminal 248 of Figure 13 is connected to a corresponding threshold detector of the signal processing channel associated with the sensor 54. Output terminal 250 where Figure 13 is connected to a timer output 252 is connected to "Strobe" inputs of the threshold detectors of the two signal processing channels associated with the sensors 52 and 54 when output terminal 254 is connected to the spark control circuitry illustrated in Figure 16.

The input terminal 232 is connected to a "clock" input of one half of a dual bistable multivibrator constituted by the integrated circuit 256. Initially the preset input of this device is at a logic high level and thus the output is also at a high logic state. When the centre sensor 58 detects an acoustic pulse, it causes its associated threshold detector 154 to go from a logic high to a logic low state. Some time later the threshold detector will switch back to the logic high. This positive going transition causes the output of the said one half of the dual bistable multivibrator constituted by the integrated circuit 256 to go low, which, in turn, is fed to, and triggers, with the first half of a dual monostable multivibrator formed by integrated circuit 258 shown in Figure 12, and its associated timing components.

The produces a positive going pulse lasting approximately 0.5 seconds at terminal 260 of integrated circuit 258.

The analogue signal of the centre sensor is shown at line 262 of Figure 17 and the output signal of the threshold detector 154 associated with the centre sensor shown at line 264. The positive going pulse of approximately 0.5 seconds duration at terminal 260 is shown at line 266.

The trailing edge of the pulse shown at line 266 triggers the second half of integrated circuit 258 which in turn generates a negative going pulse which is supplied to terminal 244 this negative going pulse having a duration of approximately 25 m sec and being shown at line 268 of Figure 17. This negative going pulse is fed through one of the four dual input Nand gates constituted by integrated circuit 270, and the output of this Nand gate, on terminal 272 is fed to a transistor switch 274. The output of the transistor switch 274, on terminal 254 provides the control signal for the high voltage pulse generator 130 as described above.

A positive going 25 m sec signal is generated simultaneously with the signal supplied to terminal 244 at terminal 276 of integrated circuit 258. This signal is shown at line 278 of Figure 17. Terminal 276 is connected to terminal 280 of integrated circuit 282 which again constitutes a dual monostable multivibrator. This results in the generation, at terminal 284 of a positive going pulse of approximately 0.4 m sec duration, this pulse being shown at line 286 of Figure 17. The trailing edge of this positive going pulse triggers the second half of integrated circuit 282 which then generates a negative going pulse about 50 m sec duration at the terminal that is connected to terminal 238. This pulse is buffered by another of the four Nand gates constituting integrated circuit 270 and appears as a positive going pulse at the terminal of integrated 270 that is connected to output terminal 252. This signal is shown at line 288 of Figure 17 and is used to perform two functions.

First the signal is coupled to a "Strobe" input of the threshold detector associated with each of the two velocity of sound sensor (52, 54) signal processing channels. Whilst this pulse is present the said comparators are enabled and can thus respond to signals present at their inputs. At all other times the comparators are disabled, thereby preventing spurious triggering of the measurement channel principally as a result of one or both of the sensors 52, 54 responding to disturbances created within the chamber defined by the target by a projectile fired through the target 14. As can be seen from Figure 17, in which lines 290 and 292 represent respectively the analogue output signal of the sensors 52, 54 the duration of the 50 m sec pulse is selected to be sufficiently long to enable the two detectors 52, 54 to detect a pulse created by a spark being discharged across the spark gap 128, but is not of an excessive duration. Figure 17 also shows the output signals generated by the threshold detectors of the signal processing channels associated with the sensors 52, 54 these outputs being shown as lines 294 and 296 respectively.

The 50 m sec signal shown at line 288 performs a second function, and the signal is coupled to terminal 298 of integrated circuit 256 which constitutes a "preset" input of one half of the dual "D-type" dual bistable multivibrator formed by integrated circuit 256. Whilst the signal present on the input terminal 298 is low the output of the associated multivibrator is maintained in a logical high state. The output of this multivibrator is shown at line 298 of Figure 17. Once the "preset" input goes high, the bistable multivibrator is effectively enabled, allowing the multivibrator to response to its other input signals. In operation, the next event that occurs is that the output of the threshold detector associated with the sensor 52 (shown at line 294) switches from a logic low to a logic high as a result of this sensor detecting the acoustic pulse generated by the spark discharge. This signal appears, in an inverted form, at the terminal 300 of integrated circuit 270 where it then connects to the "clear" input of the multivibrator constituted by integrated circuit 256. As a result the output of that multivibrator goes low, as shown in line 298 of Figure 17. Some time later the acoustic pulse generated by the spark discharge arrives at the sensor 54 causing the threshold detector of the associated circuit to switch from a logic low to a logic high this positive going transition is fed to the "clock" input of the bistable multivibrator causing the output to return its logic high state, again as shown in line 298 of Figure 17. The output of the multivibrator is fed via terminal 250, to the "speed of sound" input of the computer timer-interface, and as will be appreciated this input consists of a single negative going pulse, the duration of which is representative of the time delay between the instant at which the acoustic pulse reaches the first sensor 52 and the instant at which the acoustic pulse reaches the second sensor 54. Since the distance between the sensors is known it is thus possible readily to calculate the speed of sound in air within the chamber defined within the target 14. Figure 15 illustrates a dual comparator, that is to say the comparator that is utilised in connection with both signal processing channels associated with the sensors 52, 54. The circuit has two input terminals 308, 310, and these input terminals are connected to respective output terminals 306 of two amplifiers such as shown in Figure 14. The two output terminals 312, 314 are connected to the logic circuits described above, and thus terminal 312 is connected to terminal 246 and terminal 315 is connected to terminal 248. Terminal 316 is the strobe input to the comparator and thus this terminal 316 is connected to terminal 252.

Referring to Figure 15 the operation of one part of the illustrated circuit is as follows. The incoming signal is supplied, for example, an input terminal 308 is fed to the inverting input on one of the threshold detectors 318 whilst the non-inverting input is connected to a preset negative fixed voltage 320 derived from a resistor bias chain and voltage regulator diode 322. The comparator also has "strobe" input connected to terminal 316, which is normally held in a logical low state, thereby disabling the comparator. When the "strobe" signal goes high, the comparator is enabled and its output is then at a logic low level. When the associated sensor signal, which will comprise a fast negative going pulse, exceeds the preset voltage on the comparators non-inverting input the output 312 will switch abruptly to the logic high state. It will be appreciated that the operation of the second half of the illustrated comparator circuit is functionally electrically identical.

It is to be noted that all logic devices with number identifications commencing with the numerals 74 are available from Texas Instruments Limited of Manton Lane, Bedford, England. All logic devices with identifications commencing with the letters LM together with the device type J110 are available from National Semi-Conductors Limited of Bedford, England.

Figure 16 is a partially block diagrammatic view of a high voltage pulse generator to provide high voltage pulses to initiate a spark discharge between the electrodes 126 as shown in Figure 7. Referring to Figure 16 input terminals 324 is adapted to be connected to output 254 at the spark control device is connected, by two leads, 328 to an optical coupler 326. The optical coupler contains a light emitting diode 330 which is connected to the leads 328 and also contains a light responsive diode 332 which is connected by leads 334, to terminals 1 and 3 of an electric current control unit 336. The coupler 326 may comprise a coupler of Type No. 306061 as obtained from Radio Spares Components Limited of P.O. Box 427, 13—17 Epworth Street, London, E.C.2, England.

The electrical current control unit 336 may comprise a control unit as sold as a "Piranha" Electric Ignition Unit, as manufactured by the Dynamo And Electrical Services Limited, of Unity Works, Pearson Street, Blackburn, Lancashire, England. Such a control unit is primarily intended for use in connection with the control of ignition in automotive vehicles having internal combustion engines. The current control unit 336 is connected, by two leads, to the low tension coil 338 in the form of a high voltage impulse transformer 340. The transformer 340 may comprise an automotive ignition coil suitable for use for an internal combustion engine, such as coil type 92200613 08U-K012V as available from Robert Bosch of Stuttgart, West Germany. The high tension lead 138 is connected to the high tension coil 342 of this transformer 134. A 12 volt 5 amp current supply 346 is also connected to the current control unit 336.

Under quiescent conditions a spark control unit (not shown in Figure 16) causes a current to flow through the light emitting diode 330. Thus the second diode 332 assumes a low impedance or conducting state. Under these conditions the current control unit 336 is in its "Off" state and no current flows to the transformer 340. When it is desired to cause an acoustic pulse to be generated the spark control unit first terminates the current flowing through the diode 330. This causes diode 332 to go to a high impedance or non-conducting state, and this, in turn, causes the current unit 336 to switch on. The current begins to flow in the low tension coil 338 of transformer 342. After suitable delay, during which the current in the low tension coil 338 builds up to its maximum, the spark control unit re-applies current to the diode 330. This again causes diode 332 to assume a low impedance or conducting state subsequently causing the current flowing through the low tension coil 338 of transformer 340 to be interrupted abruptly by the control unit 336. This results in a very fast and very large voltage pulse appearing at the high tension winding 338 of the transformer 340. This high tension pulse is coupled, by the lead 138, to the lower electrode 126 shown in Figure 7. The upper electrode 126 is suitably earthed and thus a spark is discharged between the two facing substantially pointed parts of the electrodes. This spark causes an acoustic impulse to be generated, this acoustic impulse travelling away from the spark gap with, of course, the speed of sound. The resultant acoustic pulse has a fast rise time and propagates across the chamber defined within the target 14, and is detected first by the sensor 52, and is detected subsequently by the detector 54. Thus the time of flight of the pulse between the sensor 52 and the sensor 54 may be measured enabling the speed of sound in air readily to be determined.

It will be appreciated that modifications may be made to the embodiments described herein and yet still be within the scope of the inventive concept. For example the chamber 7 has substantially planar faces and such faces can present reflective surfaces such that shock or pressure wave generated within the chamber 7 on the passing of a bullet through the chamber 7 can create multiple reflections and cause problems with the detecting apparatus. Accordingly, it is possible to provide the rear faces of the sheet material 5 with small protuberances thereon such as pimples in order to produce a substantially anechoic chamber 7. Additionally the inner faces of the frame 3 can be coated with materials which will enhance the anechoic properties of the chamber 7. Additionally the beam 20 at each of the transducers therein may also be similar coated.

It will be appreciated that instead of providing the surface with pimples or coatings as described above it may be possible to include sound absorbing bodies within the chamber 7 so as to inhibit the generation of multiple reflections of the shock or pressure waves within the chamber 7 so that the chamber is an anechoic chamber. It will be appreciated that instead of providing a speed of sound in air determining means as shown it may be possible to simply provide a temperature sensing device and a humidity sensing device to enable the computer to calculate the speed of sound in air from the temperature reading and the humidity reading.

**Claims**

1. An apparatus for detecting and locating the position of a projectile fired at a target (14), said apparatus comprising the target (14), the target comprising a framework (34) covered with sheets (36) of material capable of being penetrated by a bullet whereby to form a chamber through which the projectile can pass, and spaced transducers (56, 58, 60) mounted in the chamber to detect shock or pressure waves generated in the chamber by a bullet passing therethrough, and means (76) to measure the time differences between the instants of reception of the shock or pressure wave at the respective transducers and means (80) for calculating from the time differences the position where the pullet passed through the chamber, all the transducers being located in a shielded part of the chamber beneath the zone defined by the penetrable sheets (36), characterised in that said transducers (56, 58, 60) are mounted so that their responsive elements are operatively on an arc of circle which has its centre in the target region.

2. An apparatus as claimed in claim 1 characterised in that three transducers are provided within said chamber.

3. An apparatus as claimed in claim 1 or 2 characterised in that said centre of said circle is aligned with the centre of a bull's eye or aiming mark on the target.

4. An apparatus as claimed in any one of the preceding claims characterised in that the transducers (56, 58, 60) are vibration isolated (100) from said target (14) so as to be responsive to airborne shock or pressure waves within said chamber and not mechanical shock waves in said target (14), said transducers (56, 58, 60) being mounted on a bream (42) which is vibration isolated (48) from said target (14).

5. An apparatus as claimed in any one of the preceding claims characterised in that means are provided for measuring the speed of sound in air within said chamber so that this measurement can be used when calculating the position of a bullet by said calculating means, comprising means (50) for generating a pulse of sound and means (52, 54) for measuring the time of flight of said pulse of sound over a known distance.

6. An apparatus as claimed in claim 5 characterised in that said means for measuring the time of flight comprises two spaced apart further transducers (52, 54) means (70, 72) for measuring the time differences between the instants of reception of the pulse of sound at the said two further transducers (52, 54).

7. An apparatus as claimed in claim 5 or 6 characterised in that said means (50) for generating a pulse of sound is initiated by circuit means (72) after one of said transducers (56, 58, 60) on said arc of a circle detects a shock or pressure wave from a bullet.

8. An apparatus as claimed in claim 7 characterised in that said further transducers (52, 54) are inhibited from passing signals by circuit means except during a predetemined period of time immediately after said means for generating a pulse of sound is operated.

**Patentansprüche**

1. Vorrichtung zum Erkennen und Lokalisieren des Ortes eines auf ein Ziel abgefeuerten Projektils, mit einer Zielscheibeneinrichtung (14), welche einen mit aus von einem Geschoß durchdringbaren Material bestehenden Blättern bedeckten Rahmen aufweist, wodurch eine Kammer gebildet wird, durch die das Projektil dringt, und mit mit Abstand voneinander in der Kammer befestigten Wandlern (56, 58, 60) zum Erkennen von einem die Kammer durchdringenden Geschoß erzeugten Stoß- oder Druckwellen, und mit Mitteln (76) zur Messung der Zeitdifferenz zwischen den Momenten des Aufnehmens der Stoß- oder Druckwellen an den jeweiligen Wandlern und Mitteln (80) zum Errechnen des Ortes, an dem das Geschoß die Kammer durchdrungen hat, aus den Zeitdifferenzen, wobei alle Wandler in einem abgeschirmten Teil der Kammer in der Nähe des Bereiches des durchdringbaren Blätter (36) angeordnet sind, dadurch gekennzeichnet, daß die Wandler (56, 58, 60) so angeordnet sind, daß ihre Empfangselemente in einem Bogen eines Kreises wirken, der seinen Mittelpunkt in dem Mittelpunkt des Zieles hat.

2. Vorrichtung nach Anspruch 1, dadurch gekennzeichnet, daß drei Wandler in der Kammer vorgesehen sind.

3. Vorrichtung nach Anspruch 1 oder 2, dadurch gekennzeichnet, daß der Mittelpunkt des Kreises dem Mittelpunkt einer Zielscheibe oder eines Zielzeichens ausgerichtet ist.

4. Vorrichtung nach einem oder mehreren der vorangehenden Ansprüche, dadurch gekennzeichnet, daß die Wandler (56, 58, 60) gegenüber der Zieleinrichtung (14) vor Vibrationen geschützt ist, damit diese auf Luftstoß- oder -druckwellen in der Kammer und nicht auf mechanische Erschütterungen in der Zieleinrichtung ansprechen, wobei die Wandler (56, 58, 60) auf einer Stange (42) montiert sind, die gegenüber der Zieleinrichtung Vibrationsgeschützt ist.

5. Vorrichtung nach einem der vorangehenden Ansprüche, dadurch gekennzeichnet, daß Mittel zur Messung der Geschwindigkeit des Schalls in der Luft vorgesehen sind, damit das Meßergebnis zur Berechnung des Ortes des Geschosses durch die entsprechenden Mittel berücksichtigt werden kann, die Mittel (50) zur Erzeugung eines Schallimpulses und Mittel (52, 54) zur Messung der Laufzeit des Schallimpulses über eine bekannte Strecke aufweisen.

6. Vorrichtung nach Anspruch 5, dadurch gekennzeichnet, daß die Mittel zur Messung der Laufzeit zwei mit Abstand voneinander angeordnete weitere Wandler (52, 54) und Mittel (70, 72) zur Messung der Zeitdifferenz zwischen den Momenten des Empfangens der Schallimpulse an den beiden weiteren Wandlern (52, 54) aufweisen.

7. Vorrichtung nach Anspruch 5 oder 6, dadurch gekennzeichnet, daß das Mittel (50) zur Erzeugung eines Schallimpulses von einem Schaltkreis (72) gestartet wird, nachdem einer der Wandler (56, 58, 60) an des Kreisbogen eine Stoß- oder Druckwelle von einem Geschoß erkennt.

8. Vorrichtung nach Anspruch 7, dadurch gekennzeichnet, daß die weiteren Wandler (52, 54) von einem Schaltkreis an der Abgabe von Signalen außer während eines vorgegebenen Zeitraumes unmittelbar nach Betätigung des Mittels zur Erzeugung eines Schallimpulses gehindert sind.

**Revendications**

1. Dispositif de détection et de localisation de la position d'un projectile tiré sur une cible (14), le dispositif comprenant la cible (14), la cible étant constituée d'un châssis (34) recouvert de tôles (36) en matériau capable d'être pénétré par une balle, d'où il résulte la formation d'une chambre à travers laquelle le projectile peut passer, et des transducteurs espacés (56, 58, 60) montés dans la chambre de manière à détecter les ondes de choc ou de pression produites dans la chambre par la traversée d'une balle, et un moyen (76) de mesure des différences de temps entre les instants de réception de l'onde de choc ou de pression aux transducteurs respectifs, et un moyen (80) pour calculer à partir des différences de temps l'endroit où la balle a traversé la chambre, tous les transducteurs étant situés dans une partie protégée de la chambre au-dessous de la zone définie par les tôles pénétrables (36), caractérisé en ce que les transducteurs (56, 58, 60) sont montés de façon que leurs éléments sensibles soient opérationnels sur un arc de cercle dont le centre se trouve dans la zone de la cible.

2. Dispositif selon la revendication 1, caractérisé en ce que trois transducteurs sont prévus à l'intérieur de la chambre.

3. Dispositif selon la revendication 1 ou 2, caractérisé en ce que le centre du cercle est en alignement avec le centre d'une mouche ou point de mire situé sur la cible.

4. Dispositif selon l'une quelconque des revendications 1 à 3, caractérisé en ce que les transducteurs (56, 58, 60) sont isolés (100) des vibrations de la cible (14) de manière à pouvoir répondre à des ondes de choc ou ondes de pression aériennes à l'intérieur de la chambre et non à des ondes de choc mécaniques de la cible (14), les transducteurs (56, 58, 60) étant montés sur une poutre (42) qui est isolée (48) des vibrations de la cible (14).

5. Dispositif selon l'une quelconque des revendications 1 à 4, caractérisé en ce que des moyens sont prévus pour mesurer la vitesse du son dans l'air à l'intérieur de la chambre de façon que cette mesure puisse être utilisée lors du calcul de la position d'une balle par le moyen de calcul, comprenant un moyen (50) pour produire une impulsion de son et des moyens (52, 54) pour mesurer le temps de propagation de cette impulsion de son sur une distance connue.

6. Dispositif selon la revendication 5, caractérisé en ce que le moyen de mesure du temps de propagation comprend deux autres transducteurs (52, 54) espacés l'un de l'autre, des moyens (70, 72) de mesure des différences de temps entre les instants de réception de l'impulsion de son à ces deux autres transducteurs (52, 54).

7. Dispositif selon la revendication 5 ou 6, caractérisé en ce que le moyen (50) produisant une impulsion de sont et initialisé par un moyen de circuit (72) après que l'un des transducteurs (56, 58, 60) placés sur l'arc de cercle détecte une onde de choc ou de pression due à une balle.

8. Dispositif selon la revendication 7, caractérisé en ce que les deux autres transducteurs (52, 54) sont inhibés dans la passation de signaux par le moyen de circuit sauf au cours d'un laps de temps prédéterminé suivant immédiatement l'actionnement du moyen produisant une impulsion de son.

Fig. 1.

14

14

16

22

28

10

28

10

12

12

24

20

30

32

18

26

26

1

# Fig.2.

Fig.3.

Fig.4.

Fig.5.

Fig.6.

Fig.7.

4

# Fig.8.

# Fig.9.

5

Fig.10.

Fig.11.

Fig.12.

Fig.16.

0 012 580

7

# Fig.13.

0 012 580

Fig.14.

Fig.15.

9

0 012 580

Fig.17.